(19) Europäisches Patentamt
European Patent Office
Office européen des brevets

(11) Numéro de publication: **0 183 601**
**B1**

(12) # FASCICULE DE BREVET EUROPÉEN

(45) Date de publication du fascicule du brevet: **31.05.89**

(51) Int. Cl.⁴: **A 22 C 11/00**, A 23 B 4/00, A 22 C 7/00

(21) Numéro de dépôt: **85402192.0**

(22) Date de dépôt: **13.11.85**

(54) **Procédé et installation de fabrication d'un produit alimentaire de type saucisse ou saucisson et produit alimentaire ainsi obtenu.**

(30) Priorité: **13.11.84 FR 8417253**

(43) Date de publication de la demande: **04.06.86 Bulletin 86/23**

(45) Mention de la délivrance du brevet: **31.05.89 Bulletin 89/22**

(84) Etats contractants désignés: **AT BE CH DE FR GB IT LI LU NL SE**

(56) Documents cité:
**EP-A-0 014 353**
**DE-A-2 023 054**
**DE-A-2 406 090**
**FR-A-1 102 112**
**FR-A-2 214 635**
**FR-A-2 379 985**
**US-A-1 604 526**
**US-A-3 100 710**
**US-A-3 180 737**
**US-A-3 814 560**
**US-A-3 857 330**

(73) Titulaire: **SOPARIND, 65, avenue de Ségur, F-75007 Paris (FR)**

(72) Inventeur: **Chauvin, Bernard, Les Muscardières Le Vieil Baugé, F-49150 Bauge (FR)**

(74) Mandataire: **Derambure, Christian, BUGNION ASSOCIES 55, rue Boissonade, F-75014 Paris (FR)**

**EP 0 183 601 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

L'invention concerne un procédé et une installation de fabrication d'un produit alimentaire de type saucisse ou saucisson et le produit alimentaire ainsi obtenu.

On connaît à ce jour de nombreuses variantes de saucisses ou saucissons (tels que saucisses à cuire étuvées et/ou fumées, saucisses à rôtir, saucisses à tartiner, saucisses crues, saucisses sèches ou mi-sèches, saucissons cuits, saucissons secs, saucissons mi-secs, etc..., avec ou sans boyaux). Ces saucisses peuvent avoir l'une des formes suivantes: rectiligne; incurvée; annulaire ou en fer à cheval ou en épingle à cheveux, les deux extrémités de la saucisse plus ou moins écartées l'une de l'autre étant reliées l'une à l'autre grâce aux deux agrafes ou aux liens d'extrémité et de fermeture de la saucisse associés ensemble directement ou indirectement au moyen d'un lien supplémentaire (brevet suisse 538 811); annulaire ouvert (brevet US-3 180 737); en forme de disque rond, ovale, elliptique ou de parallélépipède plat ou rectangulaire (brevet allemand 2 406 090 et français 2 379 985). Ces saucisses sont fabriquées selon l'un des deux procédés suivants: poussage dans un boyau dont l'extrémité antérieure a été préalablement fermée et dont l'extrémité postérieure est fermée après remplissage de l'enveloppe tubulaire avec le contenu comestible (brevets suisse 538 811, français 2 214 635, allemand 2 937 761); moulage grâce à un moule de forme correspond à celle souhaitée pour le produit final (brevet français 2 379 985 et allemand 2 406 090).

On connaît aussi différentes variantes de boyaux ou enveloppe tubulaire de remplissage en ce qui concerne leur nature (naturel ou synthétique), leur procédé de fabrication, leurs propriétés (par exemple leur pouvoir collant) et, enfin, leur forme. En particulier, on connaît un procédé permettant de donner au boyau en résine thermoplastique une forme incurvée (brevet français 2 343 576).

On connaît enfin des procédés (le stockage de charcuterie tels que le boudin ou la saucisse de Toulouse) qui consistent à enrouler celle-ci en hélice éventuellement sur un mandrin conique prévu à cet effet (brevet allemand 2 937 761).

Le brevet américain 3 180 737 décrit une saucisse cuite sans peau en forme d'anneau ouvert. De l'émulsion de viande crue est tout d'abord poussée dans une enveloppe tubulaire allongée, puis l'enveloppe garnie de l'émulsion de viande, déformable, est enroulée en hélice sur un mandrin, puis la viande est chauffée pour être cuite jusqu'à ce que la saucisse garde sa forme hélicoïdale, puis le mandrin est enlevé, puis on coupe la saucisse longitudinalement le long du mandrin afin de séparer chaque tour d'hélice. L'enveloppe dans laquelle la saucisse a été cuite est enlevée afin de réaliser une saucisse sans peau.

Le brevet allemand 2 406 090 décrit une saucisse à cuire, plate en forme de disque elliptique, entourée d'une peau. De la chair à saucisse est moulée, comprimée et mise en forme dans un moule en forme de disque puis réchauffée tout en étant jusqu'alors dépourvue de peau. Ensuite de la peau, telle qu'une substance coagulable comestible comme l'aginate de sodium, est appliquée sur la masse de chair à saucisse par pulvérisation ou immersion.

Le brevet français 2 379 985 décrit un produit de charcuterie en forme de disque rond ou ovale ou de parallélépipède plat ou rectangulaire. Une feuille d'enveloppe en cellophane est placée au fond d'un moule, puis on comprime dans le moule de la pâte à saucisson et on renferme l'enveloppe autour de la pâte. La pâte prémoulée est disposée sur une clayette, soumise à un étuvage puis à un séchage. Ensuite on procède à l'enlèvement de l'enveloppe initiale qui du fait de sa nature n'adhère pas au contenu comestible. Enfin on trempe la pâte ainsi étuvée, séchée et dépourvue d'enveloppe dans un bain de gélatine alimentaire et, préférentiellement on réalise un enrobage d'épices. Ce brevet vise donc à réaliser un produit du genre saucisson de forme tout à fait différente de la forme conventionnelle classique.

US-A-3 857 330 décrit un appareil pour fabriquer un hot-dog en forme d'anneau comprenant un moule ayant une série de cavités en forme d'anneau, espacées les unes des autres, chaque cavité étant adaptée pour recevoir une enveloppe circulaire aplatie formant un compartiment; un dispositif de fourrage adapté pour venir engager l'enveloppe dans chaque cavité de moule pour fourrer l'enveloppe avec un produit alimentaire de remplissage; un dispositif de scellage pour sceller l'ouverture de l'enveloppe précédemment utilisée par le dispositif de fourrage en vue de former un enveloppe scellée; un four pour la cuisson du produit alimentaire dans l'enveloppe; un dispositif d'enlèvement adapté pour venir sur chaque enveloppe individuellement et sectionner celle-ci pour permettre son enlèvement du produit alimentaire cuit; et un paquet adapté à la réception d'une pluralité de hot-dogs en vue de l'expédition et du stockage.

L'invention vise à résoudre le problème que présente pour le consommateur la présence d'extrémités d'entame et de talon ainsi que des moyens de fermeture (ficelle, agrafe, etc...) correspondant et ceci pour un produit alimentaire du type saucisse ou saucisson (notamment sec, mi-sec ou fumé), comportant une peau en boyau naturel, collé, reconstitué ou synthétique, les tranches de produit ayant toutes un contour identique ou similaire circulaire ou pseudo-circulaire.

A cet effet, l'invention concerne un procédé de fabrication d'un produit alimentaire de type saucisse ou saucisson composé d'une enveloppe tubulaire, notamment un boyau naturel, colle, reconstitué ou synthétique, et d'un contenu comestible notamment à base de viande hachée, qui comporte une première phase initiale dans laquelle on remplit l'enveloppe tubulaire avec le contenu comestible à l'état pâteux et une seconde phase finale de traitement dans laquelle on réalise au moins un traitement du contenu alimentaire dans son enveloppe tubulaire, notamment étuvage et séchage, en vue d'amener le produit alimentaire à son état définitif ou il présente une certaine tenue caractérisé par le fait qu'on part d'une enveloppe tubulaire ayant une partie extrême libre antérieure et une partie extrême libre postérieure, on remplit enveloppe avec le contenu comestible par poussage avant la seconde phase finale de traitement, on cintre l'enveloppe tubulaire et le contenu comestible remplissant l'enveloppe pour appliquer au contact l'une de l'autre les deux parties extrêmes postérieure et antérieure du contenu comestible, en vue d'assurer une continuité entre les deux parties extrêmes libres du produit alimentaire en prolongement l'une de l'autre, l'enveloppe tubulaire et le contenu comestible étant ainsi conformés en anneau totalement fermé sur lui-même de façon continue et maintenu ainsi pendant la seconde phase jusqu'à ce que le traitement de celle-ci ait figé la forme d'anneau.

L'invention concerne également une installation pour la fabrication d'un produit alimentaire de type saucisse ou saucisson composé d'une enveloppe tubulaire en boyau et d'un contenu comestible à base de viande hachée, comportant un premier poste de remplissage de l'enveloppe tubulaire avec le contenu comestible notamment par poussage et un second poste de traitement du contenu comestible, notamment de séchage, caractérisée par le fait qu'elle comporte, entre le premier et le second postes, des moyens de conformation par cintrage de l'enveloppe tubulaire et du contenu comestible constitués de deux moyens de saisie des deux parties extrêmes libres du produit alimentaire et de moyens d'entraînement relatif des deux moyens de saisie entre une première position où ils sont écartés l'un de l'autre et opposés l'un à l'autre et une seconde position où ils sont proches l'un de l'autre de manière à saisir et à opérer un déplacement relatif des deux parties extrêmes libres du produit alimentaire, ayant pour fonction d'amener les deux parties extrêmes libres opposées en contact l'une avec l'autre et en prolongement l'une de l'autre en vue de donner à l'enveloppe tubulaire et au contenu comestible composant le produit alimentaire une forme d'anneau fermé sur lui-même de façon continue.

De telles caractéristiques sont originales par rapport à l'état de la technique: la saucisse rectiligne ou incurvée selon le brevet suisse 538 811 comporte deux extrémités et donc une entame et un talon. De plus, la saucisse comporte des agrafes ou des ficelles. La saucisse selon le brevet américain 3 180 737 est un anneau ouvert et non fermé. Elle présente donc deux extrémités constituant une entame ou un talon. Il s'agit d'une saucisse cuite et non séchée. La saucisse selon le brevet allemand 2 406 090 à une forme de disque et non d'anneau. Elle est cuite et non séchée. Elle est moulée et non fabriquée par poussage. La peau est une substance coagulable et non un boyau avec tous les avantages que cela présente. Le produit de charcuterie selon le brevet français 2 379 985 a une forme de disque et non d'anneau. Il est réalisé par moulage. Il est placé pour sa fabrication dans une enveloppe perdue en cellophane et le procédé de fabrication comporte une étape finale de trempage dans un bain de gélatine pour constituer une couche d'enrobage sur laquelle on place des épices ce qui n'est pas le cas dans l'invention.

Les autres caractéristiques de l'invention résulteront de la description qui suivra en référence aux dessins annexés, dans lesquels:

- La figure 1a est une vue schématique en perspective d'un produit alimentaire représenté sur la figure 1a.
- La fiqure 1b est une vue schématique d'une coupe transversale quelconque du produit alimentaire représenté sur la figure 1a.
- Les figures 2a, 2b, 2c, 2d, 2e, 2f, 2g, et 2h sont huit vues schématiques illustrant une variante préférentielle de réalisation d'un produit alimentaire selon l'invention par poussage.
- Les figures 3a, 3b, 3c sont trois vues schématiques en coupe par un plan axial illustrant trois possibilités de la première variante préférentielle de réalisation.
- Les figures 4 et 5 sont deux vues respectivement de dessus et en coupe selon la ligne III - IV de la figure 4 illustrant des moyens de maintien du produit alimentaire selon l'invention.
- La figure 6 est une vue schématique d'une installation pour la mise en oeuvre du procédé selon l'invention.
- La figure 7 est une vue schématique en coupe par un plan axial illustrant des moyens de poussage et des moyens de coupe transversale.
- Les figures 8a, 8b, 8c sont trois vues schématiques en coupe par un plan axial illustrant trois variantes différentes de premiers moyens de retournement.
- La figure 9 est une vue schématique en coupe par un plan axial illustrant des moyens de cintrage.
- La figure 10 est une vue schématique partielle en coupe illustrant des seconds moyens de retournement.
- Les figures 11a, 11b, 11c, 11d sont quatre vues schématiques en coupe par un plan transversal de quatre variantes de réalisation du produit alimentaire selon l'invention.

L'invention concerne un procédé de fabrication d'un produit alimentaire 1 de type saucisse ou saucisson composé d'une enveloppe tubulaire 2 et d'un contenu comestible 3. Préférentiellement, l'enveloppe tubulaire 2 est un boyau naturel ou collé, ou reconstitué ou synthétique et le contenu comestible 2 à base de viande hachée tel que de la chair à saucisse. Toutefois, l'invention s'applique à des contenus comestibles de nature différente susceptibles d'être traités de manière analogue, tel que du fromage.

Le procédé comporte, de façon connue en soi, une première phase initiale dans laquelle on remplit l'enveloppe tubulaire 2 avec le contenu comestible 3 à l'état pâteux et une seconde phase finale de traitement dans laquelle on réalise au moins un traitement du contenu comestible 3 dans une enveloppe tubulaire 2, notamment et préférentiellement un étuvage et un séchage, (mais également, éventuellement, une cuisson) en vue d'amener le produit alimentaire 1 à son état définitif où il présente une certaine tenue.

Selon l'invention, avant la seconde phase finale de traitement, on amène l'enveloppe tubulaire 2 et le contenu comestible 3 à former un anneau totalement fermé sur lui-même de façon continue, dépourvu d'extrémité d'entame ou de talon.

Pendant la seconde phase finale de traitement, on maintient l'enveloppe tubulaire 2 et le contenu comestible 3 en forme d'anneau, jusqu'à ce que le traitement de la seconde phase ait figé la forme d'anneau qui devient, dès lors, la forme finale du produit alimentaire 1, présentant, en soi une certaine tenue.

Après la seconde phase de traitement, on garde l'enveloppe tubulaire 2 qui constitue la peau du produit alimentaire 1. Du fait de sa nature cette peau adhère fortement au contenu comestible 3 et elle présente d'excellentes qualités notamment de conservation, protection présentation. En principe la seconde phase est finale et n'est pas suivie d'une étape de pelage de l'enveloppe tubulaire 2 ayant servi à la fabrication du produit alimentaire 1. Toutefois, elle peut être suivie d'une étape d'enrobage dans un produit de présentation ou de sapidité ou d'une étape de finition ou d'emballage. Cependant, cette éventuelle étape supplémentaire est sans incidence sur la fabrication même du produit alimentaire 1 pas plus que le produit alimentaire 1 pas plus que le produit alimentaire 1 proprement dit.

A partir du moment ou l'enveloppe tubulaire 2 et le contenu comestible 3 sont conformés en anneau, ainsi qu'il a été mentionné précédemment et jusqu'au moment où la forme d'anneau est figée, grâce au traitement de la seconde phase, on maintient, transporte, stocke le produit alimentaire 1 préférentiellement à plat horizontalement.

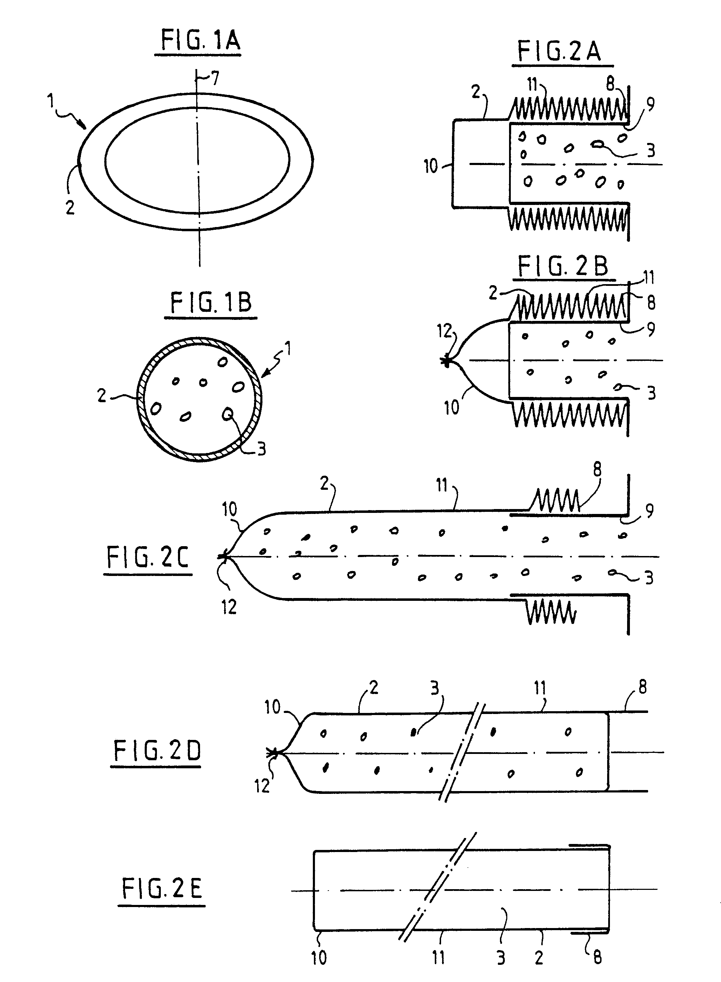

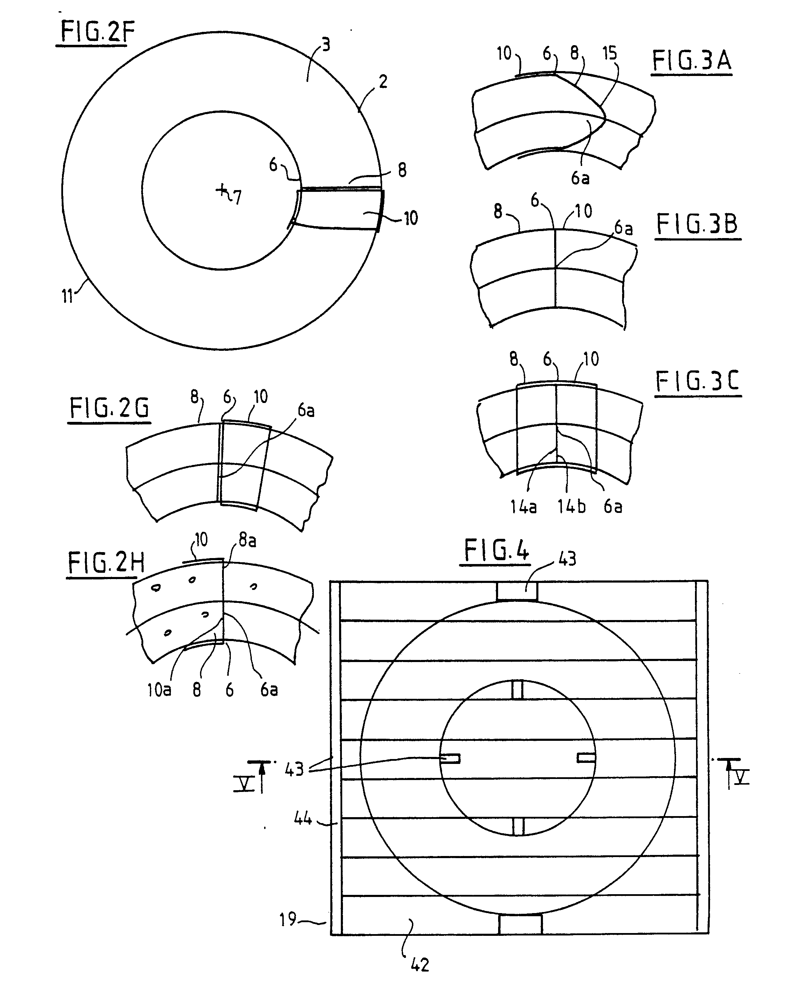

On se réfère maintenant aux figures 2 et 3 qui illustrent une variante préférentielle de réalisation de l'invention. On part alors d'une véritable enveloppe tubulaire 2 telle qu'un boyau, on la remplit avec le contenu comestible 3 par poussage et avant la seconde phase finale de traitement on cintre l'enveloppe tubulaire 2 et le contenu comestible 3 pour appliquer en contact l'une de l'autre les deux parties extrêmes postérieure 8a et antérieure 10a du contenu comestible 3, en vue d'assurer une continuité entre les deux parties extrêmes libres 14a, 14b du produit alimentaire 1 en prolongement l'une de l'autre.

De façon connue en soi, le procédé selon cette variante préférentielle comporte une première étape (figure 2a) où l'enveloppe tubulaire 2 est enfilée par sa partie extrême libre postérieure 8 sur un embout ou embossoir de remplissage 9. La partie extrême libre antérieure 10 de l'enveloppe tubulaire 2 est ouverte à cette étape du procédé. La partie médiane 11 de l'enveloppe tubulaire 2 est plissée sur l'embout 9 afin d'avoir l'encombrement axial maximal.

Dans une deuxième étape, également connue en soi (figure 2b), on ferme la partie extrême libre antérieure 10 de l'enveloppe tubulaire 2 au moyen d'une agrafe ou d'un noeud 12 ou par tout autre moyen, tel que pinçage au doigt ou pince mécanique.

Dans une troisième étape, également connue en soi (figure 2c), on débite par l'embout 9 le contenu comestible 3 tout en éloignant la partie extrême libre antérieure 10 de l'embout 9 et, progressivement, en déplissant la partie médiane 11.

Cette troisième étape est poursuivie préférentiellement jusqu'à ce que l'enveloppe tubulaire 2 ne soit pas totalement remplie, sa partie extrême libre postérieure 8 restant vide ou au moins seulement partiellement remplie, ce qui correspond à la quatrième étape (figure 2d).

Selon l'invention, pendant le cintrage, l'enveloppe tubulaire 2 est ouverte à son extrémité antérieure 10. A cet effet et dans un premier mode de réalisation possible on ferme la partie extrême libre antérieure 10 ou l'enveloppe tubulaire 2 dans la deuxième étape (figure 2b) comme indiqué précédemment, c'est-à-dire avant remplissage avec le contenu comestible 3. Puis, après remplissage on ouvre la partie extrême libre antérieure 10, par une coupe transversale et ceci dans une première partie d'une cinquième étape (figure 2e). Cette coupe transversale permet de réaliser une section droite transversale d'extrémité antérieure identique à toute autre section droite transversale du produit alimentaire et notamment celle de l'autre extrémité postérieure. Le contenu comestible 3 coupé provenant de l'extrémité antérieure peut être recyclé, ce qui évite toute perte.

Dans un second mode de réalisation possible, on remplit l'enveloppe tubulaire 2 avec le contenu comestible 3 sans fermer la partie extrême libre antérieure 10 de l'enveloppe tubulaire 2 et on règle le remplissage c'est-à-dire le débit du contenu comestible 3 à travers l'embossoir de remplissage 9 et la vitesse linéaire d'entraînement de la partie extrême libre antérieure 10 et ceci de façon que l'enveloppe tubulaire 2 soit remplie avec le contenu comestible 3, bien que la partie extrême libre antérieure 10 de l'enveloppe tubulaire 2 reste ouverte. Le surplus de contenu comestible 3 est également recyclé. Ce mode de réalisation ne comporte donc pas la coupe transversale de la première partie de la cinquième étape mentionnée précédemment dans le premier mode de réalisation.

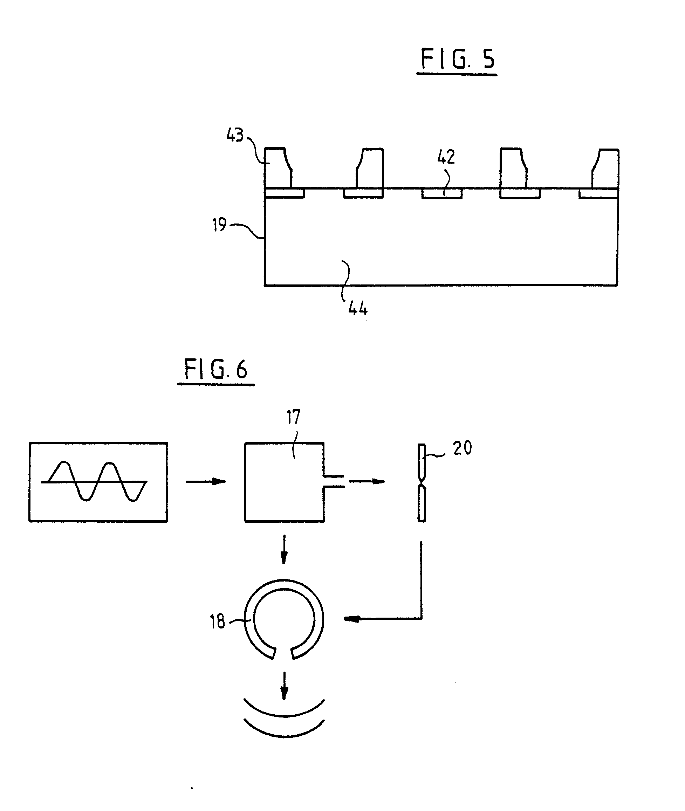

Par la suite, on appelle partie extrême libre antérieure 10 de l'enveloppe tubulaire 2 celle représentée à gauche sur la figure 5e et qui résulte soit du premier, soit du second mode de réalisation précédemment décrits.

Selon l'invention, pendant cintrage, l'enveloppe tubulaire 2 est également ouverte à sa partie extrême libre postérieure 8.

Dans la deuxième partie de la cinquième étape (figure 2e), on retourne sur elle-même et vers l'extérieur de la partie extrême libre postérieure 8 vide ou au moins seulement partiellement remplie de contenu comestible 3 et ceci pour venir l'appliquer sur la face externe de l'enveloppe 2. La partie extrême libre postérieure 8 ainsi retournée reste en réserve pour une utilisation ultérieure, le contenu comestible 3 s'étendant jusqu'au pli annulaire que forme l'enveloppe tubulaire 2, les sections droites transversales d'extrémité antérieure et postérieure étant alors indentiques ou sensiblement identiques.

La sixième étape est le cintrage de l'enveloppe tubulaire 2 et le contenu comestible 3 (figure 2f). Le cintrage permet d'appliquer en contact l'une de l'autre les deux parties extrêmes postérieure 8a et antérieure 10a du contenu comestible 3.

Jusqu'à cette sixième étape du procédé, le contenu comestible 3 est à l'état pâteux, plastiquement déformable. Le cintrage conduit donc naturellement à conférer à l'enveloppe tubulaire 2 et au contenu comestible 3 une forme générale d'anneau.

Les deux extrémités libres 14a, 14b du produit aliementaire étant identiques et mises en contact, les deux parties extrêmes libres 8, 8a, 10, 10a de l'enveloppe tubulaire 2 et du contenu comestible 3 viennent en prolongement les unes des autres et permettent de fermer l'anneau de façon continue, (figure 2g).

On recouvre avec l'une des parties extrêmes libres de l'enveloppe 2 au moins une partie de l'autre partie extrême libre. Ainsi, dans la septième étape à la fin du cintrage, (figure 2h) on retourne la partie extrême libre postérieure 8 préalablement retournée, depuis l'extérieur, en vue de recouvrir avec celle-ci la partie extrême libre antérieure 10.

Selon un premier mode de réalisation possible (figure 3a), on force l'une des parties extrêmes libres (8, 8a) à pénétrer dans l'autre partie extrême libre (10, 10a) et ceci préférentiellement dans le cas où la partie extrême libre antérieure a, en section droite transversal, une forme différente de celle du reste du produit par exemple du fait qu'elle n'a pas été coupée ou insuffisamment coupée. Il subsiste alors dans le produit et au niveau de la zone de jonction 6a du contenu comestible 3 un résidu 15 d'enveloppe tubulaire 2 correspondant à la partie extrême libre antérieure 10. Cependant, ce résidu 15 peut s'avérer être pratiquement inexistant à la fin du procédé de fabrication, compte tenu de la seconde phase finale d'étuvage et de séchage.

Dans un autre mode de réalisation possible (figure 3b), on remplit totalement l'enveloppe tubulaire 2, y compris sa partie extrême libre postérieure 8. Dans ce cas, les deux parties extrêmes libres 14a, 14b sont placées bout à bout et l'une contre l'autre, sans recouvrement des deux parties extrêmes libres 8, 10 de l'enveloppe tubulaire 2. Dans ce mode réalisation, les moyens de maintien externes maintiennent efficacement au moins temporairement, les deux parties extrêmes libres 14a, 14b l'une contre l'autre.

Dans un autre mode de réalisation, (figure 3c), on place dans la zone de jonction 6 un tronçon de jonction d'enveloppe 16 venant à recouvrement sur les parties extrêmes libres (8, 10, à recouvrement ou non.

Dans un autre mode de réalisation (non représenté), on enduit de la colle alimentaire la zone de recouvrement des deux parties extrêmes libres 8, 10 de l'enveloppe 2.

Selon invention, la seconde phase finale de traitement, notamment le séchage a également pour fonction de réaliser le mélange intime des deux parties extrêmes libres 8a, 10a du contenu comestible 3 et la solidarisation réciproque des deux parties extrêmes libres 8, 10 de l'enveloppe tubulaire 2.

La variante de réalisation qui vient d'être décrite a comme avantages principaux d'utiliser des boyaux conventionnels et de mettre en oeuvre la technique éprouvée du poussage.

Le produit alimentaire 1 de type saucisse ou saucisson est compose d'une enveloppe tubulaire 2, en boyau naturel ou artificiel, et d'un contenu comestible 3 notamment à base de viande hachée (mais aussi à base de tout produit susceptible de suivre le même type de traitement tel que étuvage, séchage, éventuellement cuisson, et en particulier les produits à base de fromage). L'enveloppe tubulaire 2 et le contenu comestible 3 forment un anneau fermé sur lui-même de façon continue (comportant un trou central) et donc dépourvu d'extrémité d'entame ou de talon. Dans sa forme de réalisation préférentielle, le produit alimentaire 1 est une saucisse ou un saucisson sec ou semi-sec ou fumé qui a donc subi une seconde phase de traitement consistant essentiellement en un étuvage suivi d'un séchage. En variante, le produit alimentaire est cuit et la seconde phase de traitement consiste en une cuisson.

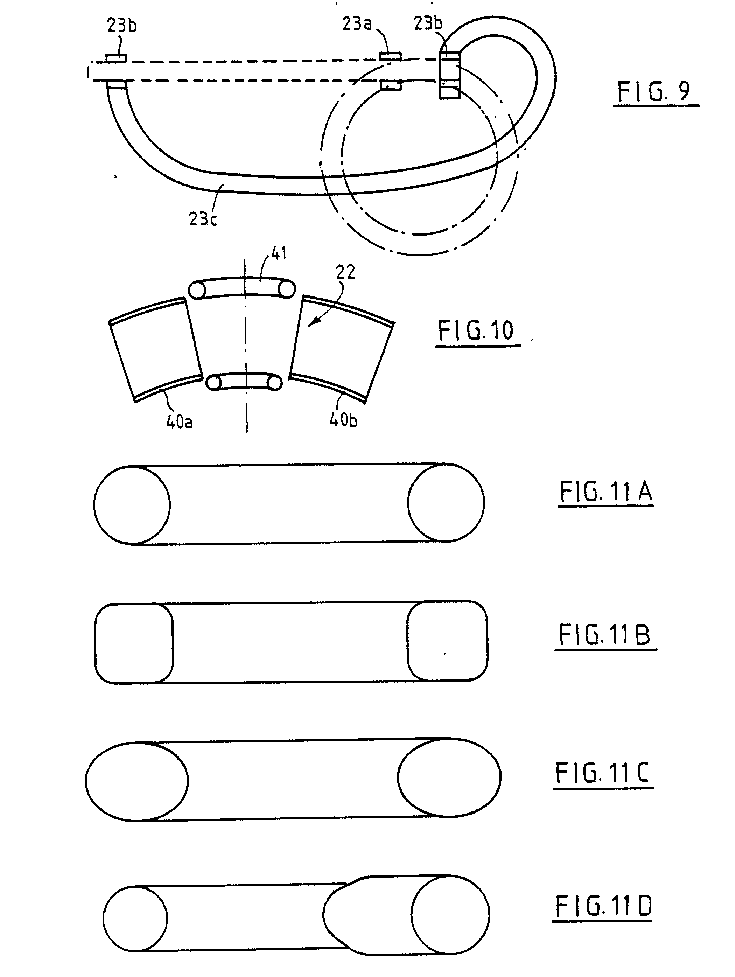

Les différentes sections droites transversales du produit alimentaire 1 sont sensiblement identiques et notamment de contour circulaire ou pesudo-circulaire (figure 11a). Dans une seconde variante (figure 11b) le contour est pseudo-carré à angles arrondis. Dans une troisième variante (figure 11c), le contour est ellipsoïdal. Dans une quatrième variante (figure 11d), le contour est circulaire selon deux diamètres différents successifs correspondant à deux tronçons successifs de l'anneau.

Le contour de l'anneau est préférentiellement circulaire (figure 1a) mais peut, également, en variante être polygonal. Les dimensions du produit alimentaire ainsi obtenu peuvent varier dans d'assez larges limites notamment et préférentiellement le diamètre d'une section droite transversale circulaire peut être compris entre 2 cm et 6 cm environ et le diamètre moyen de l'anneau compris entre 10 cm et 50 cm environ.

L'invention concerne enfin une installation pour la mise en oeuvre du procédé et la fabrication du produit alimentaire 1 qui viennent d'être décrit.

Cette installation (figure 6) comprend un premier poste 17 de remplissage de l'enveloppe tubulaire 2 avec le contenu comestible 3 et un dernier poste de traitement notamment et préférentiellement d'étuvage et séchage, (non représenté), ou, éventuellement de cuisson.

L'installation comporte, entre le premier et le second postes, des moyens de conformation par cintrage 18 de l'enveloppe tubulaire 2 et du contenu comestible 3 ayant pour fonction d'amener leurs deux parties extrêmes libres opposées 14a, 14b en contact l'une avec l'autre et en prolongement l'une de l'autre en vue de donner à l'enveloppe tubulaire 2 et au contenu comestible 3 une forme d'anneau fermé sur lui-même de façon continue.

L'installation comporte aussi des moyens de maintien 19, actifs à partir des moyens de conformation par cintrage 18 et jusqu'au second poste de traitement, ayant pour fonction de maintenir positivement le produit alimentaire pour qu'il garde la forme qui lui a été donnée par les moyens de conformation par cintrage 18.

Les moyens de maintien 19 peuvent se présenter (figures 4 et 5), sous la forme d'un plateau support 42 de type clayette, comportant des reliefs 43 de manière à maintenir le produit vers l'extérieur et/ou vers l'intérieur. Préférentiellement, les reliefs 23 sont des saillies profilées à la forme du produit alimentaire. Le plateau support 42 peut comporter des joues 44 d'une hauteur telle qu'elle permet l'empilement des plateaux 42, tout en permettant le logement entre eux du produit alimentaire.

L'installation comporte également, des moyens 20 de coupe transversale de la partie extrême libre antérieure du produit alimentaire, fonctionnellement opératoires avant que les moyens de conformation par cintrage 18 soient eux-mêmes fonctionnellement opératoires.

L'installation comporte d'une part des premiers moyens de retournement 21 de la partie extrême libre postérieure 8 de l'enveloppe tubulaire 2 vide et non totalement remplie, fonctionnellement opératoires avant que les moyens de conformation par cintrage 18 soient fonctionnellement opératoires; et, d'autre part, des seconds moyens de retournement 22 de cette partie extrême libre 8 fonctionnellement opératoires après que les moyens de conformation par cintrage 18 soient fonctionnellement opératoires.

Les moyens de cintrage (figure 9) peuvent comporter par exemple deux moyens de saisie 23a, 23b des deux parties extrêmes libres du produit alimentaire 1 et des moyens d'entraînement relatif (non représentés) de deux moyens de saisie 23a, 23b entre une première position où ils sont écartés l'un de l'autre et opposés l'un à l'autre et une seconde position où ils sont proches l'un de l'autre et ont pour fonction d'amener les deux parties extrêmes libres 14a, 14b opposées du produit alimentaire a être en contact l'une avec l'autre et en prolongement l'une de l'autre.

Par exemple, les moyens de saisie 23a sont fixes, et les moyens de saisie 23b peuvent être déplacés le long d'une boucle par les moyens d'entraînement. Les moyens de saisie 23a, 23b peuvent se présenter sous la forme d'une pince.

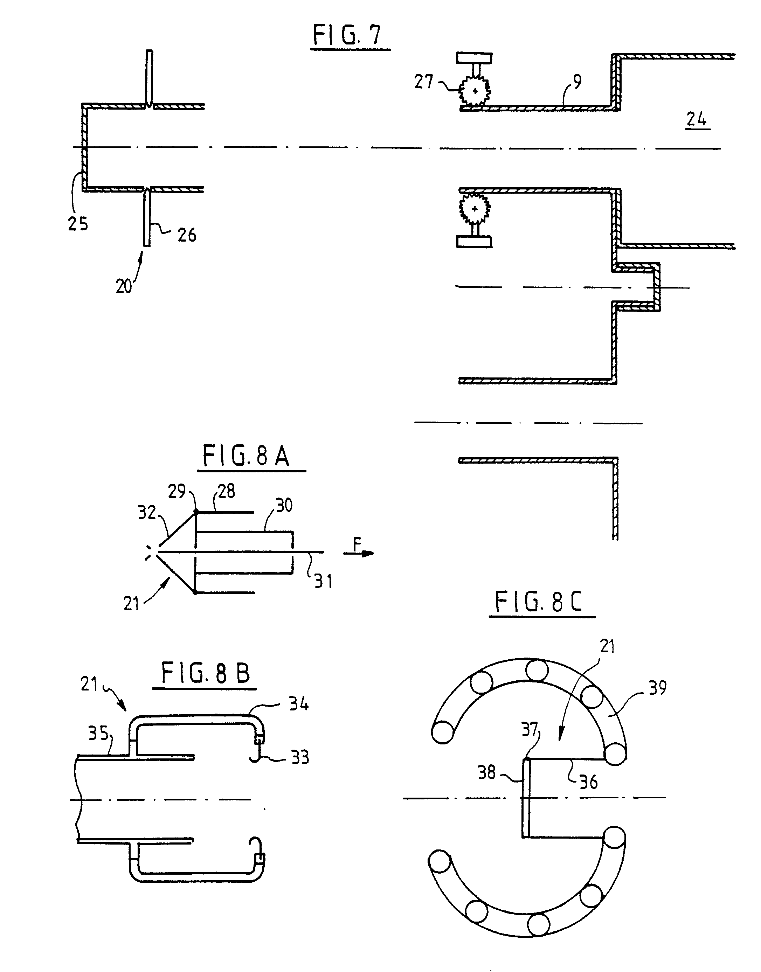

Sur la figure 7 est représenté une variante possible de premier poste de remplissage 17 et des moyens de coupe transversale 20. Le premier poste de remplissage 17 comporte un embout ou embossoir 9 pouvant être mis en communication avec un mélangeur 24 débitant le contenu comestible 3. Il peut être prévu plusieurs embouts tels que 9 formant une sorte de barillet, l'un d'entre eux étant en phase opératoire. En regard de l'embout 9 principal et écarté le long de l'axe se trouve une butée 25 formant logement pour la partie extrême antérieure du produit alimentaire. A une certaine distance en retrait de la butée 25 se trouvent placés des couteaux 26 déplacés par des moyens d'entraînement non représentés. Des molettes 27 ou similaires associées à l'embout 9 et venant en prise sur l'enveloppe tubulaire 2 permettent de déterminer la longueur de enveloppe tubulaire 2. On comprend que l'enveloppe tubulaire 2 est stockée sur l'embout 9 puis est remplie grâce au mélangeur 24 jusqu'à ce que son extrémité antérieure vienne contre la butée 25, ce qui arrête l'alimentation et provoque la coupe transversale du produit ainsi qu'il a été expliqué précédemment. Cependant, on peut se contenter d'un simple pinçage de l'extrémité antérieure de l'enveloppe tubulaire 2, pour la fermer.

Différentes variantes de premiers moyens de retournement 21 sont représentées sur les figures 8a et 8c. Ces premiers moyens de retournement 21 visent à retourner sur elle-même, comme un gant, la partie extrême libre postérieure 8 de l'enveloppe vide ou seulement partiellement remplie de contenu comestible 3. Dans une première (figure 8a), les premiers moyens de retournement 21 comportent des tiges 28 articulées en 29 sur un cadre 30 et une tirette 31 associée à un retour 32 solidaire de la tige 28. En tirant la tirette 31 dans le sens de la flèche F, on fait pivoter la tige 28 et le retour 32 autour de l'articulation 29. Cet ensemble est placé dans la partie extrême libre postérieure 8 de l'enveloppe tubulaire 2, les tiges 28 venant être appliquées contre la face interne de la partie extrême libre postérieure 8 de l'enveloppe tubulaire 2.

Dans une deuxième variante (figure 8b), les premiers moyens de retournement comportent des crochets 33 montés mobiles le long d'un chemin de guidage 34, ce chemin de guidage comportant une première partie allant en s'éloignant de l'axe 13 de l'enveloppe et une deuxième partie allant en se déplaçant parallèlement le long de l'axe 13 en se rapprochant d'un support 35 dans lequel est maintenu le produit alimentaire du côté de sa partie extrême libre postérieure 8. Des moyens d'entraînement non représentés permettent de déplacer les crochets 33 le long des chemins de guidage 34.

Dans une troisième variante (figure 8c), les premiers moyens de retournement 21 comportent des volets 36 montés pivotants autour d'une articulation 37 sur une plaque de base 38. La partie extrême libre du crochet 36 opposé à l'articulation 37 est associée à des moyens d'entraînement 39 tels qu'une chaîne sans fin. Ces volets 36 sont destinés à être placés dans l'enveloppe tubulaire 2 pour venir se placer contre la face interne de sa partie extrême libre postérieure 8.

Les seconds moyens de retournement 22 peuvent comporter (figure 10) deux moyens de maintien 40a, 40b des deux parties extrêmes libres du produit placés en regard l'un de l'autre mais cependant écartés l'un de l'autre et, entre eux, des bandes d'entraînement sans fin à friction 41 tournant dans le même sens de manière à déplier progressivement la partie extrême libre postérieure 8 de l'enveloppe tubulaire 2 qui a été précédemment retournée.

## Revendications

1. Procédé de fabrication d'un produit alimentaire de type saucisse ou saucisson composé d'une enveloppe tubulaire (2), notamment un boyau naturel, collé, reconstitué ou synthétique, et d'un contenu comestible (3) notamment à base de viande hachée, qui comporte une première phase initiale dans laquelle on remplit l'enveloppe tubulaire (2) avec le contenu comestible (3) à l'état pâteux et une seconde phase finale de traitement dans laquelle on réalise au moins un traitement du contenu alimentaire (3) dans son enveloppe tubulaire (2), notamment étuvage et séchage, en vue d'amener le produit alimentaire à son état définitif ou il présente une certaine tenue caractérisé par le fait qu'on part d'une enveloppe tubulaire (2) ayant une partie extrême libre antérieure (10) et une partie extrême libre postérieure (8), on remplit l'enveloppe (2) avec le contenu comestible (3) par poussage; avant la seconde phase finale de traitement, on cintre l'enveloppe tubulaire (2) et le contenu comestible (3) remplissant l'enveloppe (2) pour appliquer au contact l'une de l'autre les deux parties extrêmes postérieure (8a) et antérieure (10a) du contenu comestible (3), en vue d'assurer une continuité entre les deux parties extrêmes libres (14a), (14b) du produit alimentaire en prolongement l'une de l'autre, l'enveloppe tubulaire (2) et le contenu comestible (3) étant ainsi conformés en anneau totalement fermé sur lui-même de façon continue et maintenu ainsi pendant la seconde phase jusqu'à ce que le traitement de celle-ci ait figé la forme d'anneau.

2. Procédé selon la revendication 1, caractérisé par le fait qu'à partir du moment ou l'enveloppe tubulaire (2) et le contenu comestible (3) sont conformés en anneau, jusqu'au moment ou la forme d'anneau est figée, on maintient, transporte, stocke le produit alimentaire à plat horizontalement.

3. Procédé selon l'une quelconque des revendications 1 et 2, caractérisé par le fait que pendant le cintrage l'enveloppe tubulaire (2) est ouverte à sa partie extrême libre antérieure (10).

4. Procédé selon l'une quelconque des revendications 1 à 3, caractérisé par le fait qu'avant remplissage de l'enveloppe tubulaire (2) avec le contenu comestible (3) on ferme la partie extrême libre antérieure (10) de l'enveloppe tubulaire (2) et qu'après remplissage on ouvre la partie extrême libre antérieure (10) en vue de cintrage ultérieur, notamment par coupe transversale.

5. Procédé selon l'une quelconque des revendications 1 à 3, caractérisé par le fait qu'on remplit l'enveloppe tubulaire (2) avec le contenu comestible (3) sans fermer la partie extreme libre antérieure (10) de l'enveloppe tubulaire (2) et on règle le remplissage.

6. Procédé selon l'une quelconque des revendications 1 à 5, caractérisé par le fait que pendant le cintrage l'enveloppe tubulaire (2) est ouverte à sa partie extrême libre postérieure (8).

7. Procédé selon l'une quelconque des revendications 1 à 6, caractérisé par le fait qu'on remplit au moins seulement partiellement la partie extrême libre postérieure (8) de l'enveloppe tubulaire (2) avec le contenu comestible (3).

8. Procédé selon l'une quelconque des revendications 1 à 7, caractérisé par le fait qu'on force l'une des parties extrêmes libres (14a, 14b) du produit alimentaire à pénétrer dans l'autre partie (14b, 14a).

9. Procédé selon l'une quelconque des revendications 1 à 8, caractérisé par le fait qu'on recouvre l'une des parties extrêmes libres (8, 10) de l'enveloppe tubulaire (2) avec l'autre partie extrême libre (10, 8).

10. Procédé selon la revendication 9, caractérisé par le fait qu'avant cintrage on retourne sur elle-même vers l'extérieur la partie extrême libre postérieure (8) de l'enveloppe tubulaire (2) et qu'à la fin du cintrage on retourne la partie extrême libre postérieure (8) de l'enveloppe tubulaire (2) depuis l'extérieur en vue de recouvrir avec celle-ci la partie extrême libre antérieure (10).

11. Procédé selon l'une quelconque des revendications 1 à 8, caractérisé par le fait qu'on place les deux parties extrêmes libres (8, 10) de l'enveloppe tubulaire (2) bout à bout et sans recouvrement.

12. Procédé selon l'une quelconque des revendications 1 à 11, caractérisé par le fait qu'on place dans la zone de jonction (6) des deux parties extrêmes libres (8, 10) de l'enveloppe tubulaire (2) un tronçon de jonction à recouvrement.

13. Procédé selon l'une quelconque des revendications 1 à 12, caractérisé par le fait que la seconde phase finale de traitement notamment le séchage a également pour fonction de réaliser le mélange intime continu des deux parties extrêmes du contenu comestible (3) et la solidarisation réciproque des deux parties extrêmes libres (8, 10) de l'enveloppe tubulaire (2).

14. Installation pour la fabrication d'un produit alimentaire de type saucisse ou saucisson composé d'une enveloppe tubulaire (2) en boyau et d'un contenu comestible (3) à base de viande hachée, comportant un premier poste (17) de remplissage de l'enveloppe tubulaire (2) avec le contenu comestible (3) notamment par poussage et un second poste de traitement du contenu comestible (3), notamment de séchage, caractérisée par le fait qu'elle comporte, entre le premier et le second postes, des moyens de conformation par cintrage (18) de l'enveloppe tubulaire (2) et du contenu comestible (3) constitués de deux moyens de saisie (23a, 23b) des deux parties extrêmes libres du produit alimentaire et de moyens d'entraînement relatif des deux moyens de saisie (23a, 23b) entre une première position où ils sont écartés l'un de l'autre et opposés l'un à l'autre et une seconde position où ils sont proches l'un de l'autre de manière à saisir et à opérer un déplacement relatif des deux parties extrêmes libres (14a, 14b) du produit alimentaire, ayant pour fonction d'amener les deux parties extrêmes libres opposées (14a, 14b) en contact l'une avec l'autre et en prolongement l'une de l'autre en vue de donner à l'enveloppe tubulaire (2) et au contenu comestible (3) composant le produit alimentaire une forme d'anneau fermé sur lui-même de façon continue.

15. Installation selon la revendication 14, caractérisée par le fait qu'elle comporte des moyens de maintien (19), actifs à partir des moyens de conformation par cintrage (18) et jusqu'au second poste de traitement ayant pour fonction de maintenir positivement le produit alimentaire pour qu'il garde la forme qui lui a été donnée par les moyens de conformation par cintrage (18) et ce jusqu'à la fin du second poste, ces moyens de maintien se présentant sous la forme d'un plateau (42) comportant des reliefs de maintien (43).

16. Installation selon l'une quelconque des revendications 14 et 15, caractérisée par le fait qu'elle comprend des moyens de coupe transversale (20) de la partie extrême libre antérieure du produit alimentaire fonctionnellement opératoires avant que les moyens de conformation par cintrage (18) soient fonctionnellement opératoires.

17. Installation selon l'une quelconque des revendications 14 à 16, caractérisée par le fait qu'elle comprend des premiers moyens de retournement (21) de la partie extrême libre postérieure (8) de l'enveloppe tubulaire (2), fonctionnellement opératoires avant que les moyens de conformation par cintrage (18) soient fonctionnellement opératoires.

18. Installation selon l'une quelconque des revendications 14 à 17, caractérisée par le fait qu'elle comprend des seconds moyens de retournement (22) de la partie extrême libre postérieure (8) de l'enveloppe tubulaire (2), fonctionnellement opératoires après que les moyens de conformation par cintrage (18) soient fonctionnellement opératoires.

19. Installation selon l'une quelconque des revendications 17 et 18, caractérisée par le fait que les premier et second moyens de retournement comportent des organes mobiles (28, 33, 36, 41) permettant de déplacer la partie extrême libre postérieure (8) de l'enveloppe tubulaire (2).

**Patentansprüche**

1. Verfahren zur Herstellung eines wurstförmigen Nahrungsmittels, das aus einer schlauchförmigen Hülle (2), insbesondere einem natürlichen, geklebten, wieder aufgebauten oder synthetischen Darm und aus einem eßbaren Inhalt (3), insbesondere auf der Basis von gehacktem Fleisch zusammengesetzt ist, mit einer ersten Anfangsverfahrensstufe, in der die schlauchförmige Hülle (2) mit dem eßbaren Inhalt (3) in teigigem Zustand gefüllt wird, und mit einer zweiten Endbehandlungs-Verfahrensstufe, in welcher zumindest eine Behandlung des Nahrungsmittelinhalts (3) in der schlauchförmigen Hülle (2), insbesondere eine Wärmebehandlung und Trocknung im Hinblick auf eine Verbesserung des Nahrungsmittels zu seinem endgültigen Zustand, in welchem er ein bestimmtes Aussehen besitzt, durchgeführt wird, dadurch gekennzeichnet, daß von einer schlauchförmigen Hülle (2) mit einem vorderen freien Endbereich (10) und einem hinteren freien Endbereich (8) ausgegangen wird und daß die Hülle (2) mit dem eßbaren Inhalt (3) durch Einschieben gefüllt wird, daß vor der zweiten Endbehandlungsstufe die schlauchförmige Hülle (2) und der eßbare Inhalt (3) beim Füllen der Hülle (2) gebogen wird, um das hintere und das vordere Ende (8a, 10a) des eßbaren Inhalts (3) miteinander in Berührung zu bringen und um so einen stetigen Verlauf zwischen den beiden freien Endbereichen (14a, 14b) des Nahrungsmittels, dadurch, daß sie einander verlängern, sicherzustellen, wobei die schlauchförmige Hülle (2) und der eßbare Inhalt (3) auf diese Weise in Form eines vollkommen geschlossenen in sich stetig fortlaufenden Ringes ausgebildet und so während der zweiten Stufe aufrechterhalten werden, bis bei deren Behandlung die Ringform erstarrt ist.

2. Verfahren nach Anspruch 1, dadurch gekennzeichnet, daß von dem Augenblick an, in dem die schlauchförmige Hülle (2) und der eßbare Inhalt (3) zum Ring ausgebildet sind, bis zu dem Augenblick, in dem die Ringform erstarrt ist, das Nahrungsmittel auf einer horizontalen Platte gehalten, transportiert und gelagert wird.

3. Verfahren nach einem der Ansprüche 1 und 2, dadurch gekennzeichnet, daß während des Biegens die schlauchförmige Hülle (2) an ihrem vorderen freien Ende (10) geöffnet wird.

4. Verfahren nach einem der Ansprüche 1 bis 3, dadurch gekennzeichnet, daß vor dem Füllen der schlauchförmigen Hülle (2) mit dem eßbaren Inhalt (3) der vordere freie Endbereich (10) der schlauchförmigen Hülle (2) verschlossen wird und daß nach dem Füllen der vordere freie Endbereich (10) im Hinblick auf das spätere Biegen insbesondere durch einen querverlaufenden Schnitt geöffnet wird.

5. Verfahren nach einem der Ansprüche 1 bis 3, dadurch gekennzeichnet, daß die schlauchförmige Hülle (2) mit dem eßbaren Inhalt (3) gefüllt wird, ohne daß der vordere freie Endbereich (10) der schlauchförmigen Hülle (2) verschlossen wird, und daß das Füllen gesteuert wird.

6. Verfahren nach einem der Ansprüche 1 bis 5, dadurch gekennzeichnet, daß während des Biegens die schlauchförmige Hülle (2) an ihrem hinteren freien Endbereich (8) geöffnet wird.

7. Verfahren nach einem der Ansprüche 1 bis 6, dadurch gekennzeichnet, daß der hintere freie Endbereich (8) der schlauchförmigen Hülle (2) zumindest nur teilweise mit dem eßbaren Inhalt (3) gefüllt wird.

8. Verfahren nach einem der Ansprüche 1 bis 7, dadurch gekennzeichnet, daß eines der freien Endbereiche (14a, 14b) des Nahrungsmittels in den anderen Endbereich (14b, 14a) hineingedrängt wird.

9. Verfahren nach einem der Ansprüche 1 bis 8, dadurch gekennzeichnet, daß eines der freien Endbereiche (8, 10) der schlauchförmigen Hülle (2) mit dem anderen freien Endbereich (10, 8) überdeckt wird.

10. Verfahren nach Anspruch 9, dadurch gekennzeichnet, daß vor dem Biegen das hintere freie Ende (8) der schlauchförmigen Hülle (2) nach außen gestülpt wird und daß nach dem Biegen das hintere freie Ende (8) der schlauchförmigen Hülle zum Überdecken des vorderen freien Endes (10) von außen her gewendet wird.

11. Verfahren nach einem der Ansprüche 1 bis 8, dadurch gekennzeichnet, daß die beiden freien Endbereiche (8, 10) der schlauchförmigen Hülle (2) Ende an Ende und ohne Überdeckung angeordnet werden.

12. Verfahren nach einem der Ansprüche 1 bis 11, dadurch gekennzeichnet, daß an der Verbindungszone (6) der beiden freien Endbereiche (8, 10) der schlauchförmigen Hülle (2) ein überdeckender Verbindungsabschnitt angeordnet wird.

13. Verfahren nach einem der Ansprüche 1 bis 12, dadurch gekennzeichnet, daß die zweite Endbehandlungsstufe, insbesondere die Trocknung in gleicher Weise die Funktion besitzt, eine kontinuierliche innere Vermischung an den beiden Endbereichen des eßbaren Inhalts (3) und eine gegenseitige Verfestigung der beiden freien Endbereiche (8, 10) der schlauchförmigen Hülle (2) zu erreichen.

14. Vorrichtung zur Herstellung eines wurstförmigen Nahrungsmittels, das aus einer schlauchförmigen Hülle (2) aus Darm und aus einem eßbaren Inhalt (3) auf der Basis von gehacktem Fleisch zusammengesetzt ist, mit einer ersten Station (17) zum Füllen der schlauchförmigen Hülle (2) mit dem eßbaren Inhalt (3) insbesondere durch Schieben, und mit einer zweiten Station zum Behandeln des eßbaren Inhalts (3), insbesondere zum Trocknen, dadurch gekennzeichnet, daß sie zwischen der ersten und der zweiten Station Mittel zum Verformen durch Biegen (18) der schlauchförmigen Hülle (2) und des eßbaren Inhalts (3) aufweist, welche Mittel durch zwei Greifermittel (23a, 23b) für die beiden freien Enden des Nahrungsmittels und durch Mittel zum relativen Verschieben der beiden Greifermittel (23a, 23b) zwischen einer ersten Position, in welcher sie voneinander entfernt und einander gegenüberliegend angeordnet sind, und einer zweiten Position, in welcher sie einander benachbart sind, derart, daß die beiden freien Endbereiche (14a, 14b) des Nahrungsmittels ergriffen und relativ zueinander verschoben und die beiden einander gegenüberliegenden freien Endbereiche (14a, 14b) in Berührung miteinander und in Verlängerung zueinander gebracht werden können, um der schlauchförmigen Hülle (2) und dem eßbaren Inhalt (3), die das Nahrungsmittel bilden, die Form eines geschlossenen, in sich stetig fortlaufenden Ringes zu geben, gebildet sind.

15. Vorrichtung nach Anspruch 14, dadurch gekennzeichnet, daß sie Haltemittel (19) aufweist, die von den Mitteln (18) zum Verformen durch Biegen aus bis zur zweiten Behandlungsstation aktiv sind, wobei ihre Funktion darin besteht, das Nahrungsmittel positiv zu halten, damit es die Form, die ihm durch die Mittel (18) zu Verformen durch Biegen gegeben ist, bis zum Ende der zweiten Station hält, wobei die Mittel zum Halten die Form einer Platte (42) mit Haltevorsprüngen (43) aufweisen.

16. Vorrichtung nach einem der Ansprüche 14 und 15, dadurch gekennzeichnet, daß sie Mittel (20) zum querverlaufenden Schneiden des vorderen freien Endbereichs des Nahrungsmittels besitzt, welche Mittel in Betrieb gehen, bevor die Mittel (18) zum Verformen durch Biegen in Betrieb gesetzt sind.

17. Vorrichtung nach einem der Ansprüche 14 bis 16, dadurch gekennzeichnet, daß sie erste Mittel (21) zum Umstülpen des hinteren freien Endbereichs (8) der schlauchförmigen Hülle (2) aufweist, welche Mittel in Betrieb gehen, bevor die Mittel (18) zum Verformen durch Biegen in Betrieb gesetzt sind.

18. Einrichtung nach einem der Ansprüche 14 bis 17, dadurch gekennzeichnet, daß sie zweite Mittel (22) zum Umstülpen des hinteren freien Endbereichs (8) der schlauchförmigen Hülle (2) aufweist, welche zweite Mittel in Betrieb gehen, nachdem die Mittel (18) zum Verformen durch Biegen in Betrieb gesetzt sind.

19. Einrichtung nach einem der Ansprüche 17 und 18, dadurch gekennzeichnet, daß die ersten und die zweiten Mittel zum Umstülpen bewegliche Elemente (28, 33, 36, 41) besitzen, die ein Verschieben des hinteren freien Endbereichs (8) der schlauchförmigen Hülle (2) ermöglichen.

## Claims

1. Process for manufacturing sausage-type foodstuffs composed of a tubular casing (2), especially a natural, adhesive, reconstituted or synthetic gut, and of an edible content (3), especially based on mincemeat, which involves a first initial phase, in which the tubular casing (2) is filled with the edible content (3) in the pasty state, and a second final treatment phase, in which at least one treatment of the edible content (3) in its tubular casing (2), especially steaming and drying, is carried out, in order to bring the foodstuff into its final state where it has a certain stability, characterized in that the starting-point is a tubular casing (2) having a front free end part 10) and a rear free end part (8), the casing (2) is filled with the edible content (3) by pushing; before the second final treatment phase, the tubular casing (2) and the edible content (5) filling the casing (2) are bent in order to bring the two rear and front end parts (8a, 10a) of the edible content (3) into contact with one another, so as to ensure continuity between the two free end parts (14a, 14b) of the foodstuff in the extension one of the other, the tubular casing (2) and the edible content (3) thus being shaped as a ring completely closed on itself continuously and so maintained during the second phase, until the treatment of the latter has fixed the form of a ring.

2. Process according to claim 1, characterized in that, from the moment when the tubular casing (2) and the edible content (3) are shaped as a ring to the moment when the form of a ring is fixed, the foodstuff is maintained, transported and stored flat and horizontally.

3. Process according to either one of claims 1 and 2, characterized in that, during the bending, the tubular casing (2) is open in its front free end part (10).

4. Process according to any one of claims 1 to 3, characterized in that, before the tubular casing (2) is filled with the edible content (3), the front free end part (10) of the tubular casing (2) is closed, and, after filling, the front free end part (10) is opened for the purpose of subsequent bending, especially by cross-cutting.

5. Process according to any one of claims 1 to 3, characterized in that the tubular casing (2) is filled with the edible content (3), without closing the front free end part (10) of the tubular casing (2), and the filling is regulated.

6. Process according to any one of claims 1 to 5, characterized in that, during the bending, the tubular casing (2) is open in its rear free end part (8).

7. Process according to any one of claims 1 to 6, characterized in that the rear free end part (8) of the tubular casing (2) is filled at least only partially with the edible content (3).

8. Process according to any one of claims 1 to 7, characterized in that one of the free end parts (14a, 14b) of the foodstuff is forced to penetrate into the other part (14b, 14a).

9. Process according to any one of claims 1 to 8, characterized in that one of the free end parts (8, 10) of the tubular casing (2) is covered with the other free end part (10, 8).

10. Process according to claim 9, characterized in that, before the bending, the rear free end part (8) of the tubular casing (2) is turned back outwards on itself, and in that, at the end of the bending, the rear free end part (8) of the tubular casing (2) is turned back from the outside in order to overlap with the latter the front free end part (10).

11. Process according to any one of claims 1 to 8, characterized in that the two free end parts (8, 10) of the tubular casing (2) are placed end to end and without overlapping.

12. Process according to any one of claims 1 to 11, characterized in that an overlapping junction portion is placed in the joining zone (6) of the two free end parts (8, 10) of the tubular casing (2).

13. Process according to any one of claims 1 to 12, characterized in that the second final treatment phase, especially the drying, also performs the function of ensuring the continuous intimate mixing of the two end parts of the edible content (3) and the interconnection of the two free end parts (8, 10) of the tubular casing (2).

14. Apparatus for manufacturing sausage-type foodstuffs composed of a tubular casing (2) made from gut and of an edible content (3) based on mincemeat, comprising a first station (17) for filling the tubular casing (2) with the edible content (3), especially by pushing, and a second station for the treatment of the edible content (3), especially drying, characterized in that it possesses, between the first and second stations, means (18) for the shaping by bending of the tubular casing (2) and edible content (3), which consist of two means (23a, 23b) for grasping the two free end parts of the foodstuff and of means for the relative driving of the two grasping means (23a, 25b) between a first position, in which they are set apart from and opposite one another, and a second position, in which they are close to one another so as to grasp and effect a relative displacement of the two free end parts (14a, 14b) of the foodstuff, the function being to bring the two opposing free end parts (14a, 14b) into contact with one another and into the extension one of the other, in order to give the tubular casing (2) and the edible content (3) forming the foodstuff the form of a ring closed on itself continuously.

15. Apparatus according to claim 14, characterized in that it possesses retaining means (19) which are active from the means for shaping by bending (18) up to the second treatment station and the function of which is to retain the foodstuff positively so that it preserves the form given to it by the means for shaping by bending (18), this being ensured up to the end of the second station, the retaining means taking the form of a plate (42) having retaining releases (43).

16. Apparatus according to either one of claims 14 and 15, characterized in that it possesses means (20) for the cross-cutting of the front free end part of the foodstuff, which are functionally operative before the means for shaping by bending (18) are functionally operative.

17. Apparatus according to any one of claims 14 to 16, characterized in that it possesses first means (21) for turning back the rear free end part (8) of the tubular casing (2), which are functionally operative before the means for shaping by bending (18) are functionally operative.

18. Apparatus according to any one of claims 14 to 17, characterized in that it possesses second means (22) for turning back the rear free end part (8) of the tubular casing (2), which are functionally operative after the means for shaping by bending (18) are functionally operative.

19. Apparatus according to either one of claims 17 and 18, characterized in that the first and second turning-back means comprise movable members (28, 33, 36, 41) making it possible to displace the rear free end part (8) of the tubular casing (2).

FIG. 1A
1
2
7
FIG. 2A
2
11
8
9
3
10
FIG. 1B
1
2
3
FIG. 2B
2
11
8
9
12
10
3
FIG. 2C
10
2
11
8
9
3
12
FIG. 2D
10
2
3
11
8
12
FIG. 2E
10
11
3
2
8

FIG.2F
3
2
6
8
7
10
11
FIG.3A
10
6
8
15
6a
FIG.3B
8
6
10
6a
FIG.3C
8
6
10
14a
14b
6a
FIG.2G
8
6
10
6a
FIG.2H
10
8a
10a
8
6
6a
FIG.4
43
43
V
V
44
19
42

FIG. 5

43
42
19
44

FIG. 6
17
20
18

FIG. 7
27
9
24
25
26
20
FIG. 8 A
29
28
32
30
F
31
21
FIG. 8 C
FIG. 8 B
21
39
21
34
35
33
37
38
36

23b
23a
23b
FIG. 9
23c
41
22
FIG.10
40a
40b
FIG. 11 A
FIG. 11 B
FIG. 11 C
FIG. 11 D